# EUROPEAN PATENT APPLICATION

(11) **EP 1 983 298 A1**
(43) Date of publication of application: **22.10.2008**
(21) Application number: 07121080.1
(22) Date of filing: 20.11.2007
(51) Int. Cl.: G01B 11/24, G01B 11/28

(54) **Optical area scanning device**

(30) Priority: 20.04.2007 IT MO20070139
(71) Applicant: CON - MED S.R.L., 41033 Concordia Sulla Secchia (MO) (IT)
(72) Inventor: Bergamaschi, Paolo, 41033, CONCORDIA SULLA SECCHIA MO (IT)
(74) Representative: Modiano, Micaela Nadia

(57) **Abstract**

An optical scanning device (1), particularly for detecting the shape of an object, which comprises: at least one light source (2) adapted to emit light and at least one detection sensor (3) which comprises a light-sensitive surface (3a) and is arranged so as to receive the light emitted by the light source. The device further comprises a volume (10) which is arranged along a path of the light from the light source (2) to the detection sensor (3) so that the light source can illuminate the volume (10), which is adapted to accommodate an object (T) to be detected so that the object (T) interrupts the transmission of at least part of the light onto the detection sensor (3), thus projecting the profile of the object (T) onto the sensitive surface (3a) of the detection sensor (3), the detection sensor (3) being adapted to emit an electrical signal which is proportional to the area of the sensitive surface (3 a) struck by the light emitted by the light source (2).

## Description

The present invention relates to an optical scanning device for detecting the area of an object.

Optical scanning devices which do not provide for contact with the object to be detected originated as an aid for design activities and are used for various applications, such as for example for performing dimensional checks, for reconstructing the profile and therefore the shape of an object, et cetera.

These devices associate the advantage of not requiring physical contact with the object to be detected with high scanning rates, which are higher than those of contact scanning devices, and with a high performance in terms of precision and repeatability of the measurements.

The most widely used optical devices include laser devices.

Laser devices are based on the operating principle of optical triangulation, i.e., they use a detection sensor, for example of the CCD (Charge Coupled Device) type, which is adapted to detect the laser beam emitted by a point-like light source and reflected by the object to be detected, converting the light signal into a digital signal. The angle of incidence of the reflected laser beam on the detection sensor allows to determine the shape of the reflecting surface.

In order to ensure reflection of the surfaces of the object to be measured, it may be necessary to treat such surfaces with matting sprays.

As described above, the light source of a laser optical device is of the point-like type. This entails the fact that the emitted laser beam has an extremely low thickness and is therefore capable of covering an equally small area.

The detection of medium-large surfaces can therefore require very long times and can entail the need to move the light source and the object to be detected with respect to each other.

To increase the scanning rate, it is possible to increase the thickness of the laser beam emitted by the light source by using a suitable optical system, inclined by a preset angle with respect to the incident beam, so as to generate a thicker light beam.

Generally, the maximum thickness that can be achieved in this manner is approximately 50 mm.

In order to achieve higher thicknesses, it is necessary to resort to the use of a plurality of laser devices in parallel, so as to add the effect of each individual device.

These laser scanning devices are not free from drawbacks, including the fact that they require high investment costs.

Another drawback of known devices is that they allow to detect extremely small surfaces, and therefore the measurement of surfaces characterized by areas with medium-large dimensions requires long execution times or the use in parallel of a substantial number of devices, which entails inevitably a substantial increase in investment costs.

The aim of the present invention is to eliminate the above mentioned drawbacks of the background art, by providing an optical area scanning device which allows to reduce investment costs significantly.

Within this aim, an object of the present invention is to provide an optical area scanning device which allows rapid detection even of surfaces characterized by medium-large areas.

Another object of the present invention is to provide a device which is simple, relatively easy to provide in practice, safe in use, effective in operation, and has a relatively low cost.

This aim and these and other objects which will become better apparent hereinafter are achieved by the present optical area scanning device, which comprises:
at least one light source suitable to emit light,
at least one detection sensor which comprises a light-sensitive surface and is arranged so as to receive the light emitted by said light source,
characterized in that it comprises a volume which is arranged along a path of the light from the light source to the detection sensor so that said light source can illuminate said volume, which is adapted to accommodate an object to be detected so that the object interrupts the transmission of at least part of the light onto said detection sensor, thus projecting the profile of the object onto the sensitive surface of the detection sensor, said detection sensor being adapted to emit an electrical signal which is proportional to the area of said sensitive surface struck by the light emitted by said light source.

Further characteristics and advantages of the present invention will become better apparent from the following detailed description of a preferred but not exclusive embodiment of an optical area scanning device, illustrated by way of non-limiting example in the accompanying drawings, wherein:

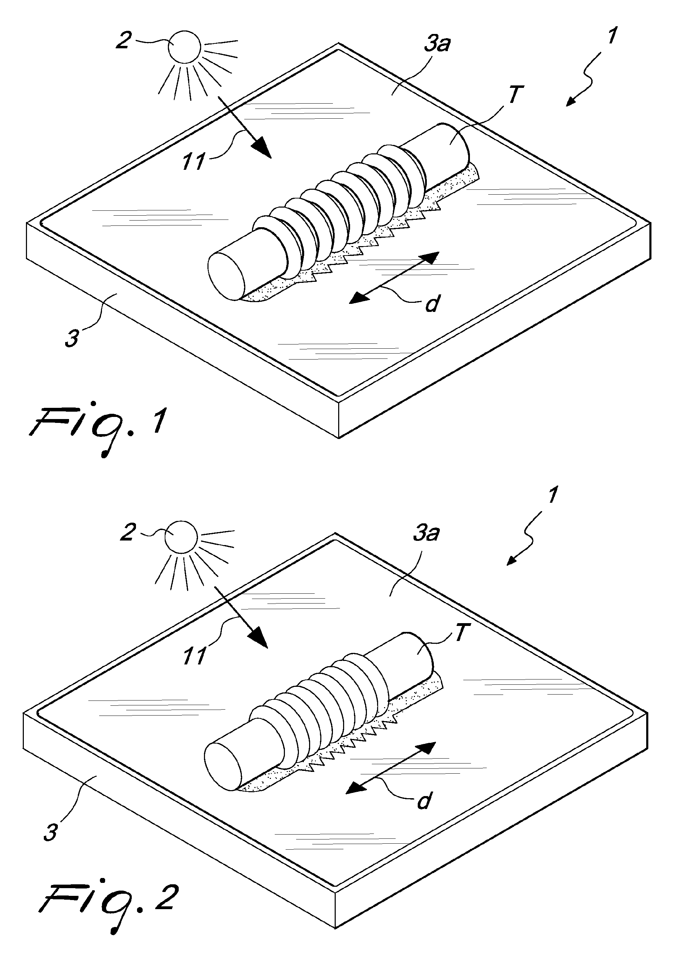

Figure 1 is a perspective view of the device according to the invention, with a tubular element to be detected, which rests on the sensitive surface and is partially extended;
Figure 2 is a perspective view of the device of Figure 1 with the tubular element to be detected compressed along the direction d;
Figure 3 is a front view of the device of Figure 1;
Figure 4 is a perspective view of the device according to the invention, comprising an element for containing the tubular element to be detected;
Figure 5 is a front view of the device of Figure 4.

With reference to the figures, the reference numeral 1 designates an optical area scanning device particularly for detecting the shape variations of an object.

The device 1 comprises at least one light source 2, which is adapted to emit light, and at least one detection sensor 3, which comprises a light-sensitive surface 3a, is arranged so as to receive the light emitted by the light source 2, and is adapted to emit an electrical signal which is proportional to the area of the sensitive surface 3a that is struck by the light.

Advantageously, the detection sensor 3 comprises one or, more preferably, a plurality of photovoltaic cells.

The device 1 comprises a volume 10, which is arranged along a path of the light from the light source 2 to the detection sensor 3, designated by the reference numeral 11 in the figures, so that it can be illuminated by such light.

Preferably, the detection sensor 3 is arranged so as to face the light source 2 and the volume 10 is defined by the portion of space that is interposed between the light source 2 and the detection sensor 3.

The volume 10 is adapted to accommodate an object to be detected, such as, in the example shown in the figures, a tubular element T which can be extended along a direction d, so that the object interrupts the transmission of at least part of the light that is incident to the detection sensor 3, thus projecting the profile of the object onto the sensitive surface 3a.

Conveniently, the object to be detected is arranged so as to rest on the sensitive surface 3a.

More particularly, the object that can be introduced in the volume 10 causes a decrease in the signal emitted by the detection sensor 3 with respect to the situation in which no object is contained in the volume 10, such decrease being proportional to the area of the sensitive surface 3a that is blocked out.

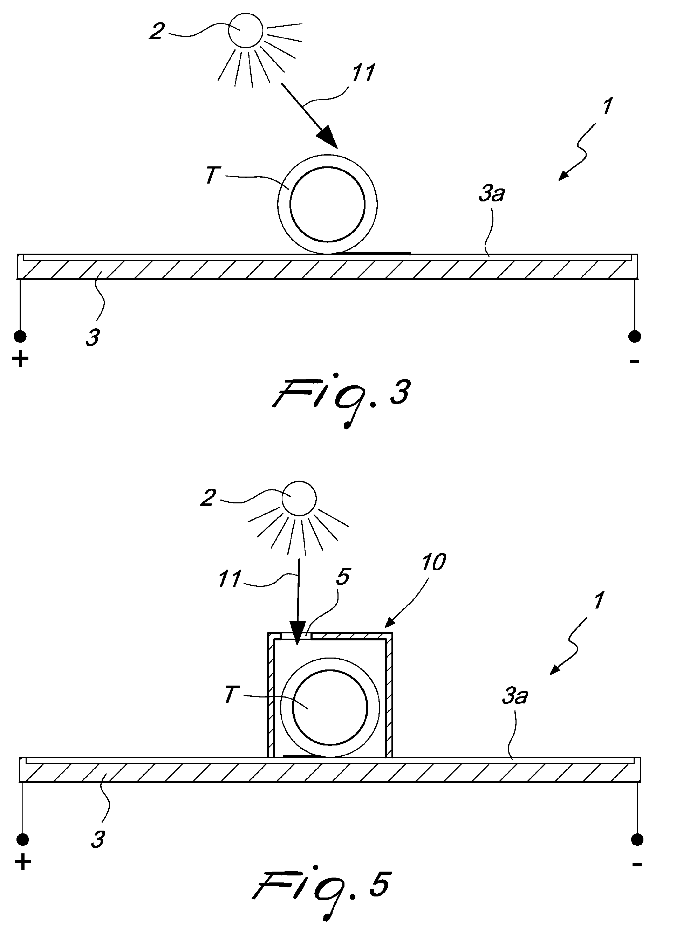

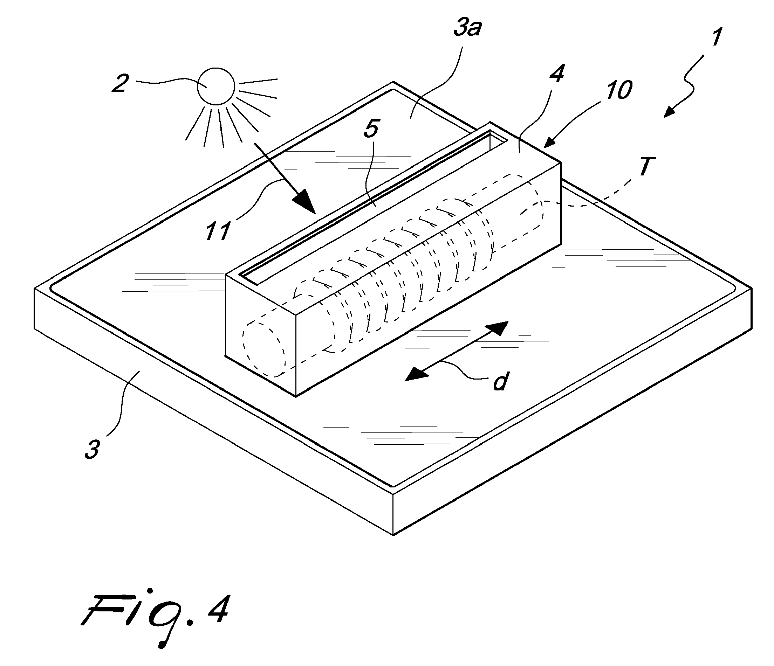

In a preferred embodiment, shown in Figures 4 and 5, the device 1 comprises at least one element 4 for containing the object to be detected, which is conveniently made of opaque material, is inserted within the volume 10 and is provided with at least one slit 5.

More particularly, the slit 5, arranged on the side of the light source 2, in a peripheral region of the containment element 4, is suitable to allow the passage of the light emitted by the light source 2 in order to detect the projection onto the sensitive surface 3a only of the portion of the object that is arranged at the slit.

The slit 5 therefore allows to detect only the profile of the portion of interest, blocking out the remaining area: this allows to amplify the dependency of the signal in output on the shape of the portion being considered, excluding from detection regions which are not of interest and consequently facilitating the detection of any changes in shape of such portion.

In a preferred embodiment, the device 1 comprises at least one optical filter, not shown in the figures, which is introduced in the volume 10 and is suitable to allow the passage of color radiation, of the light emitted by the light source 2, having preset wavelengths.

More particularly, the use of one or more optical filters is designed to allow the passage of wavelengths of the emitted light which do not pass through the object to be detected, which is thus opaque with respect to these wavelengths, so as to improve the cleanness of the signal in output from the detection sensor 3 and its dependency on the projected profile.

In an alternative embodiment, again in order to obtain an output signal which is not distorted by the passage of light through the object to be detected, the device 1 uses light sources which are adapted to emit light at preset wavelengths which do not pass through said object.

Advantageously, the device 1 can be associated with shape recognition software of the type currently commercially available, which, if calibrated appropriately, allows to determine the shape of the detected object as a function of the electrical signal in output.

The operation of the present invention is as follows.

By positioning an object to be detected in the volume 10 and lighting it with the light source 2, the device 1 emits an electrical signal which is a function of the area of the sensitive surface 3a that is illuminated.

By deforming the object, the projection of its profile on the sensitive surface 3a changes accordingly, and the detection sensor 3 emits an electrical signal which is different from the one previously emitted only if the extent of the area defined by the projected profile changes.

Of course, if the shape variation of the blocked out region does not also entail a variation in extension, the signal emitted by the detection sensor 3 is the same.

One type of exemplifying but non-limiting application of the device according to the invention is to identify the shape variations of the extensible tubular element T, shown in the figures, which is appropriately made of plastics.

More precisely, the tubular element T, as soon as the extrusion step has ended, must be compressed along the direction d in order to deform it and give it a particular shape, of the concertina type, which allows the tubular element to be subsequently extended and compacted along the direction d according to specific requirements.

The shape assumed by the tubular element T at the end of the compaction step is therefore characterized by a plurality of peaks and troughs, which can assume an angular extent which can vary as a function of the degree of compaction of said tubular element.

To allow the compaction of the tubular element T to have an effect, it must occur in a rather short time, and it is therefore fundamentally important to know, during such compaction step, the state of compression of the portion of interest of the tubular element T in order to adjust accordingly the speed of the compaction means.

This control is performed by positioning the portion of the tubular element T of interest on the sensitive surface 3a of a photovoltaic cell 3, preferably introducing it within the containment element 4, and illuminating it with a light source 2.

The light source 2 projects the profile of the portion of the tubular element T to be detected onto the sensitive surface 3a. The signal emitted by the photovoltaic cell 3, which is proportional to the extent of the blocked-out area, decreases as the tubular element T increases in compaction, since the free surface between two successive peaks decreases and the blocked-out area increases. Conversely, a high-intensity output signal therefore indicates that the detected portion of the tubular element T is scarcely compressed.

The device 1 is therefore capable of providing, practically in real time, an indication as to the state of compression of the tubular element T as a function of the value of the emitted electrical signal, since the degree of compaction affects the extent of the blocked-out area on the sensitive surface 3 a.

The device 1, by interfacing with the compaction means, adjusts their speed according to the output signal.

The device 1 is therefore particularly useful in recognizing shape variations of the same object.

Further, by connecting the device 1 to appropriately calibrated shape recognition software it is possible to determine from the intensity of the emitted signal the shape of the profile being projected and not only the extension of its area.

In practice it has been found that the described invention achieves the proposed aim and objects, and in particular the fact is stressed that it allows to detect easily and cheaply the shape variations even of large objects.

The invention thus conceived is susceptible of numerous modifications and variations, all of which are within the scope of the appended claims.

All the details may further be replaced with other technically equivalent elements.

In practice, the materials used, as well as the contingent shapes and dimensions, although the described materials are preferred, may be any according to requirements without thereby abandoning the scope of the protection of the appended claims.

The disclosures in Italian Patent Application No. MO2007A000139 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An optical area scanning device (1), comprising:
at least one light source (2) adapted to emit light,
at least one detection sensor (3) which comprises a light-sensitive surface (3a) and is arranged so as to receive the light emitted by said light source (2),
**characterized in that** it comprises a volume (10) which is arranged along a path of the light from the light source (2) to the detection sensor (3) so that said light source (2) can illuminate said volume (10), which is adapted to accommodate an object (T) to be detected so that the object (T) interrupts the transmission of at least part of the light onto said detection sensor (3), thus projecting the profile of the object (T) onto the sensitive surface (3a) of the detection sensor (3), said detection sensor (3) being adapted to emit an electrical signal which is proportional to the area of said sensitive surface (3a) struck by the light emitted by said light source (2).

2. The device according to claim 1, **characterized in that** said detection sensor (3) comprises at least one photovoltaic cell.

3. The device according to one or more of the preceding claims, **characterized in that** said detection sensor (3) comprises a plurality of photovoltaic cells.

4. The device according to one or more of the preceding claims, **characterized in that** it comprises at least one element (4) for containing the object (T) to be detected, which is introduced in said volume (10) and is provided with at least one slit (5) arranged on the side of said light source (2) and in a peripheral region of said containment element (4) and is adapted to allow the passage of the light emitted by said light source (2) in order to project onto said sensitive surface (3a) the profile of the portion of said object (T) which is arranged at said slit (5).

5. The device according to claim 4, **characterized in that** said containment element (4) is made of opaque material.

6. The device according to one or more of the preceding claims, **characterized in that** it comprises at least one optical filter which is inserted into said volume (10) and is adapted to allow the passage of color radiation of the light emitted by said light source (2) having preset wavelengths.

7. The device according to one or more of the preceding claims, **characterized in that** said light source (2) emits a light which has preset wavelengths.

8. Use of photovoltaic cells as detection sensors in optical scanning devices, particularly for detecting the shape of an object.
